**Europäisches Patentamt**

**European Patent Office**

**Office européen des brevets**

(19)

(11) Veröffentlichungsnummer: **0 296 300**
**A2**

# (12) EUROPÄISCHE PATENTANMELDUNG

(21) Anmeldenummer: 87810716.8

(22) Anmeldetag: 04.12.87

(51) Int. Cl.⁴: **A22C 11/10**

The title of the invention has been amended (Guidelines for Examination in the EPO, A-III, 7.3).

(30) Priorität: 24.06.87 CH 2383/87

(43) Veröffentlichungstag der Anmeldung:
**28.12.88 Patentblatt 88/52**

(84) Benannte Vertragsstaaten:
**AT CH DE ES FR IT LI SE**

(71) Anmelder: **Wälchli, Hans, Dr.**
**Rebbergstrasse 32**
**CH-8113 Boppelsen(CH)**

(72) Erfinder: **Wälchli, Hans, Dr.**
**Rebbergstrasse 32**
**CH-8113 Boppelsen(CH)**

(74) Vertreter: **Monsch, René et al**
**E. BLUM & CO., Patentanwälte Vorderberg 11**
**CH-8044 Zürich(CH)**

(54) **Verfahren und Vorrichtung zum Verschliessen von Wurst.**

(57) Die Wurst umfasst ein von einer schlauchförmigen, thermoplastischen Haut (33) eingeschlossenes Lebensmittel. Beide Wurstenden (34) sind allseits symmetrisch zu einem Zipfel (35) verjüngt. Der Zipfel (35) ist mit Ultraschall oder thermisch verschweisst und weist einen Metall- oder Kunststoffclip (37) auf, wobei die Schweissstelle (36) ausserhalb des Clips (37) angeordnet ist.

FIG. 4

EP 0 296 300 A2

## Wurst

Die vorliegende Erfindung betrifft eine Wurst gemäss dem Oberbegriff des Patentanspruchs 1, sowie ein Verfahren zur Herstellung einer solchen Wurst und eine Verschliessmaschine zur Durchführung dieses Verfahrens.

Bekannte Wurstverschliessmaschinen werden beispielsweise an sogenannte nach Wunsch portionierte Wurstmengen liefernde Vakuum-Füller angeschlossen, um die Würste zu verschliessen. Ein solcher Vakkum-Füller umfasst beispielsweise einen Einfülltrichter aus rostfreiem Edelstahl, durch den sämtliche Abfüllprodukte mittels einer Förderspirale einem sogenannten Flügelzellen-Förderwerk zugeführt werden, das die pastöse Masse portioniert und durch ein Füllrohr herausgibt.

Die Wurstverschliessmaschine kann beispielsweise ein weiteres an das Füllrohr des Vakuum-Füllers anschliessbares längeres Füllrohr aufweisen, auf dem eine Darmraupe vorbestimmter Länge magaziniert ist. Zweckmässigerweise umfasst eine solche Wurstverschliessmaschine einen Separator mit zwei Klemmschieber, um eine Einschnürung zwischen den Würsten zu bewirken und sie an ihren Enden zu einem Zipfel zu raffen und gegebenenfalls abzudrehen, sowie eine Verschluss-Vorrichtung, um die Enden der Würste mit Clips beispielsweise ab Drahtrolle zu verschliessen.

Ein Nachteil einer derart hergestellten Wurst besteht darin, dass die Wurstenden nicht hermetisch dicht sind, so dass Bakterien durch den Zipfel eindringen können, weshalb solche Würste nur beschränkt haltbar sind.

Die Aufgabe der vorliegenden Erfindung besteht daher darin, eine bessere Konservierung der Wurstwaren zu erreichen. Diese Aufgabe wird durch die im kennzeichnenden Teil des Patentanspruchs 1 angegebenen Massnahmen erreicht.

Vorteilhafte Ausgestaltungen der Erfindung sind in weiteren Ansprüchen angegeben.

Nachfolgend wird ein Ausführungsbeispiel der Erfindung anhand einer Zeichnung erläutert. Dabei zeigt:

Fig. 1 eine skizzierte Darstellung einer Verschliessmaschine nach der Erfindung,

Fig. 2 eine schematische Darstellung zur Veranschaulichung des Füllvorgangs einer Darmraupe,

Fig. 3 eine schematische Darstellung zur Veranschaulichung des Verschliessvorgangs nach dem erfindungsgemässen Verfahren, und

Fig. 4 eine nach dem erfindungsgemässen Verfahren hergestellte Wurst.

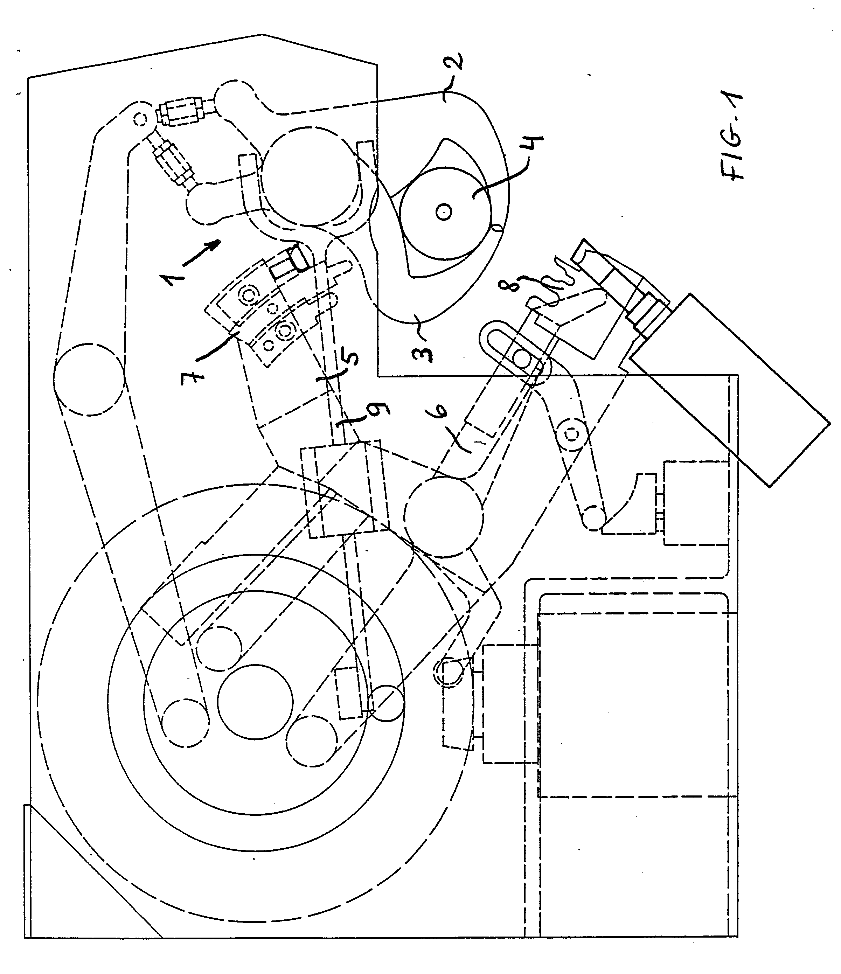

Fig. 1 zeigt nur einen Teil der Verschliessmaschine nach der Erfindung, da zur Vereinfachung der Zeichnung eine sich in ihrem unteren Teil befindende Antriebsvorrichtung mit zusätzlichen Steuerungen nicht dargestellt wurde. Die Verschliessmaschine nach Fig. 1 umfasst einen Klemmschieber 1 mit zwei Schenkeln 2, 3, zwischen denen eine Wurst 4 gehalten wird, sowie ein Klemmaggregat mit zwei Armen 5, 6, an deren Enden je eine Verschluss-Vorrichtung 7, 8 angeordnet ist. Dabei ist der Klemmschieber 1 doppelt ausgeführt, um zusammen mit einer Schiebergabel 9 einen Separator zu bilden. Die Verschluss-Vorrichtungen 7 und 8 sind ebenfalls doppelt ausgeführt.

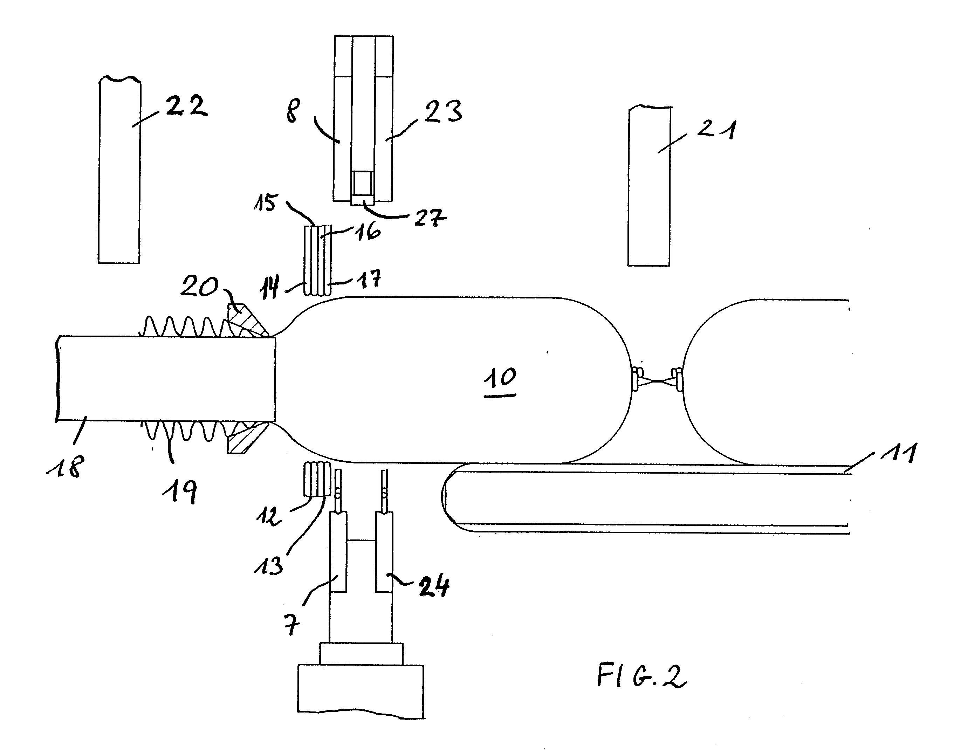

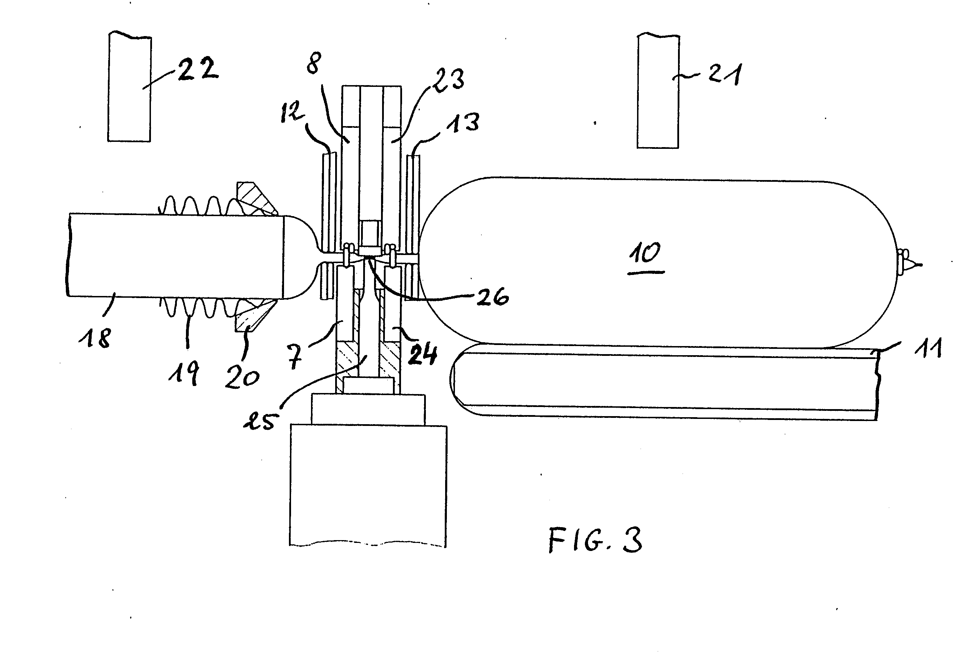

Fig. 2 zeigt eine Wurst 10 auf einer Förderkette 11 und zwei schematisch dargestellte Klemmschieber 12 und 13, die insgesamt vier Schenkel 14, 15, 16 und 17 aufweisen. Die Schenkel 14 und 15 bilden den Klemmschieber 12 und die Schenkel 16 und 17 den Klemmschieber 13. In Fig. 2 sind die Klemmschieber 12 und 13 im offenen Zustand und dicht nebeneinander dargestellt, während sie in Fig. 3 im geschlossenen Zustand und voneinander getrennt erscheinen. In den Figuren 2 und 3 sind neben der Wurst 10, der Förderkette 11, einem Füllrohr 18, einer Darmraupe 19, einer Darmbremse 20 und zwei Gehäusewänden 21 und 22 noch je zwei Verschlussvorrichtungen 7, 8 und 23, 24 dargestellt, und zwar in Fig. 2 im offenen und in Fig. 3 im geschlossenen Zustand.

Der bisher beschriebene Teil der Wurstverschliessmaschine nach den Figuren 1, 2 und 3 funktioniert dem Stand der Technik gemäss in der Weise, dass der durch die Elemente 12 bis 17 und 9 gebildete Separator zunächst durch ein Schliessen der Klemmschieber 12 und 13 die Wurst an einem Ende zusammendrückt und dann durch eine axiale Separations-Bewegung eine Einschnürung am Ende der Wurst bewirkt, um sie an ihrem Ende zu einem Zipfel zu raffen und gegebenenfalls abzudrehen, wobei in einer zweiten Operationsphase die Verschluss-Vorrichtungen 7, 8 und 23, 24 das zweite Ende der bereitgestellten Wurst und das erste Ende einer noch auszufüllenden Wurst gleichzeitig mit Clips beispielsweise ab Drahtrolle verschliessen.

Die erfindungsgemässe Verschliessmaschine weist zusätzlich einen Schweisskolben 25 mit einem Schweiss-Element 26 und eine Matrize 27 auf, die eine Schweiss-Vorrichtung auf thermischer und/oder Ultraschall-Basis bilden. Diese Schweiss-Vorrichtung befindet sich zwischen den Elementen 7 und 24 und kann vorzugsweise gleichzeitig oder zeitlich verzögert bewegt werden, um den Zipfel zu verschweissen.

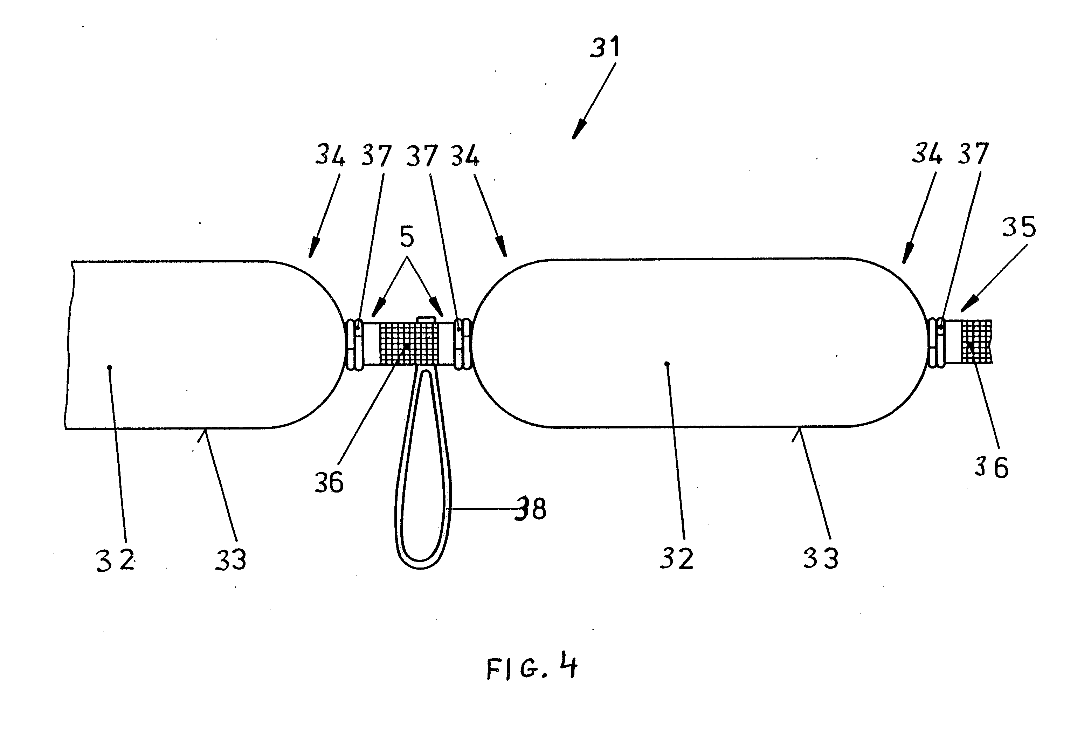

Die in Fig. 4 dargestellt Wurstraupe 31 besteht aus mehreren zusammenhängenden Würsten 32.

Die Haut 33 der Wurst 32 besteht aus thermoplastischem Kunststoff, z.B. aus PVDC oder aus Polyamid und umschliesst ein Lebensmittel z.B. Fleischbrät. Die beiden Wurstenden 34 sind allseits symmetrisch zu einem Zipfel 35 verjüngt, z.B. gerafft oder abgedreht. Die Zipfel 35 sind durch eine Schweissstelle 36 hermetisch verschlossen. Zum Verschweissen ist die beschriebene Ultraschall- und/oder thermische Schweiss-Vorrichtung vorgesehen. Vom freien Ende abgewandt ist an jedem Zipfel 35 ein Clip 37 angebracht. Der Clip 37 fängt beim Füllen den Fülldruck auf und dient zum Aufhängen der Wurst. Er kann an der Wurst 32 auch bloss einseitig angebracht werden, nämlich an dem beim Füllen vorderen Ende der Wurst. Bei geringen Fülldrücken können die Clip 37 ganz weggelassen werden. Insbesondere bei dieser Variante kann es zweckmässig sein, beim Verschweissen der Zipfel 35 gleich eine Aufhängeschlaufe 38 aus thermoplastischem Kunststoff an den Zipfel 35 anzuschweissen. Bei der Herstellung kann jede Portionentrennstelle entzweigeschnitten werden, so dass keine Wurstraupe 31 sondern einzelne Würste 32 entstehen.

Durch die Schweissstelle wird ein hermetischer Verschluss erreicht, so dass die Wurst wesentlich länger haltbar ist. Ausserdem wird durch diese Abdichtung ein Heraustropfen von Flüssigkeit vermieden. Falls am Zipfel zusätzlich ein Clip gesetzt wird, haftet dieser durch die Schweissstelle wesentlich besser. Auch schwere Würste können daher am Clip aufgehängt werden, ohne dass die Gefahr besteht, dass der Clip abrutscht, der aus Metall oder Kunststoff oder auch ein Drahtclip sein kann.

## Ansprüche

1. Wurst umfassend ein von einer schlauchförmigen, thermoplastischen Haut (33) eingeschlossenes Lebensmittel, wobei die Wurstenden (34) zu einem Zipfel (35) verjüngt sind, dadurch gekennzeichnet, dass der Zipfel (35) verschweisst ist.

2. Wurst nach Anspruch 1, dadurch gekennzeichnet, dass der Zipfel (35) mit Ultraschall verschweisst ist.

3. Wurst nach Anspruch 1, dadurch gekennzeichnet, dass der Zipfel (35) thermisch verschweisst ist.

4. Wurst nach einem der Ansprüche 1 bis 3, dadurch gekennzeichnet, dass mindestens einer der beiden Zipfel (35) zusätzlich einen Clip (37) aufweist, wobei die Schweissstelle (36) ausserhalb des Clips (37) angeordnet ist.

5. Wurst nach einem der Ansprüche 1 bis 4, dadurch gekennzeichnet, dass an der Schweissstelle (36) mindestens des einen Zipfels (35) eine thermoplastische Schlaufe (38) angeschweisst ist.

6. Verfahren zur Herstellung einer Wurst nach einem der Ansprüche 1 bis 5, dadurch gekennzeichnet, dass die Wurst an einem Ende zusammengedrückt wird, dass durch eine axiale Bewegung eine Einschnürung am Ende der Wurst bewirkt wird, um sie an ihrem Ende zu einem Zipfel zu raffen, und dass der Zipfel verschweisst wird.

7. Verfahren nach Anspruch 6, dadurch gekennzeichnet, dass zumindest angenähert gleichzeitig mit dem Verschweissen die Wurst mit Clips verschlossen wird.

8. Verschliessmaschine zur Durchführung des Verfahrens nach Anspruch 6 oder 7, dadurch gekennzeichnet, dass die Verschliessmaschine eine Schweissvorrichtung (25, 26, 27) aufweist, die sich neben einem Klemmschieber (12, 13) befindet, der die Einschnürung der Wurst (10) bewirkt.

9. Verschliessmaschine nach Anspruch 8, dadurch gekennzeichnet, dass die Schweiss-Vorrichtung (25, 26, 27) einen Schweisskolben (25) und eine Matrize (27) aufweist.

10. Verschliessmaschine nach Anspruch 8 oder 9, dadurch gekennzeichnet, dass zwischen der Schweiss-Vorrichtung (25, 26, 27) und dem Klemmschieber (12,13) eine Verschluss-Vorrichtung (7, 8) eingefügt ist.

FIG.1

FIG.2

FIG. 3

EP 0 296 300 A2

FIG. 4

EP 0 296 300 A2